Europäisches Patentamt

European Patent Office

Office européen des brevets

(11) Veröffentlichungsnummer: **0 362 610**
**A2**

## (12) EUROPÄISCHE PATENTANMELDUNG

(21) Anmeldenummer: 89117195.1

(22) Anmeldetag: 18.09.89

(51) Int. Cl.5 **H04N 7/14**

(30) Priorität: 01.10.88 DE 3833538

(43) Veröffentlichungstag der Anmeldung:
11.04.90 Patentblatt 90/15

(84) Benannte Vertragsstaaten:
AT CH DE ES FR GB IT LI SE

(71) Anmelder: **ROBERT BOSCH GMBH**
**Postfach 10 60 50**
**D-7000 Stuttgart 10(DE)**

(72) Erfinder: **Dohmann, Bernhard**
**Am Kohlenberg 2**
**D-3204 Nordstemmen 4(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Gegenseheinrichtung.**

(57) Bei einer Gegenseheinrichtung, bei welcher von einer Gegenstation empfangene Signale nach einer Decodierung in einem ersten Bildspeicher zwischengespeichert und auf einem Bildschirm sichtbar gemacht werden, und bei welcher ferner die von einer Kamera erzeugten und zur Gegenstation übertragenen Signale in einem zweiten Bildspeicher zwischengespeichert werden, werden aus dem zweiten Bildspeicher zu ausgewählten Bildpunkten gehörende Signale ausgelesen und über einen dritten Bildspeicher einem zwischen dem ersten Bildspeicher und dem Bildschirm vorgesehenen Multiplexer zugeführt.

Fig. 1

EP 0 362 610 A2

## Gegenseheinrichtung

Die Erfindung geht aus von einer Gegenseheinrichtung nach der Gattung des Hauptanspruchs.

Gegenseheinrichtungen bestehen im wesentlichen aus zwei Stationen mit je einer Bildwiedergabeeinrichtung und einer Videokamera. Bekannte Vorschläge für derartige Einrichtungen sehen eine Kombination mit dem Fernsprechnetz vor, weshalb auch die Bezeichnungen Fernsehtelefon und Bildtelefon gebräuchlich sind. Eine andere Form von Gegenseheinrichtungen besteht in sogenannten Videokonferenzanlagen, bei welchen sich mehrere Gesprächspartner gegenseitig sehen können. Ferner besteht die Möglichkeit, Dokumente zu übertragen.

Sowohl für Fernsehtelefoneinrichtungen als auch für Videokonferenzanlagen ist es wünschenswert, nicht nur das Bild des bzw. der Gesprächspartner zu sehen, sondern auch das von sich selbst oder von dem aufgenommenen Dokument zu übertragende Bild zu kontrollieren.

Aufgabe der vorliegenden Erfindung ist es, eine Kontrolle des zu übertragenden Bildes zu ermöglichen, ohne auf das empfangene Bild ganz zu verzichten. Dieses soll mit möglichst geringem technischen Aufwand erfolgen.

Die erfindungsgemäße Gegenseheinrichtung mit den kennzeichnenden Mermalen des Hauptanspruchs, hat den Vorteil, daß mit relativ geringem technischen Aufwand das auszusendende Bild in verkleinertem Maßstab in das empfangene Bild eingesetzt wird (Bild im Bild). Die Erfindung nutzt in besonders vorteilhafter Weise aus, daß für die eingangs erwähnten Fernsehtelefoneinrichtungen und Videokonferenzanlagen datenreduzierende Übertragungsverfahren verwendet werden, die mindestens einen sendeseitigen und einen empfangsseitigen Bildspeicher benötigen.

Die erfindungsgemäße Gegenseheinrichtung hat ferner den Vorteil, daß das auszusendende Bild auf dem Bildschirm so erscheint, wie es nach Anwendung der datenreduzierenden Codierung der Gegenstation übertragen wird.

Durch die in den Unteransprüchen aufgeführten Maßnahmen sind vorteilhafte Weiterbildungen und Verbesserungen der im Hauptanspruch angegebenen Erfindung möglich.

Insbesondere ermöglicht eine Weiterbildung, daß handelsübliche sogenannte CRT-Controller verwendet werden können, wobei durch eine gemeinsame Steuerung mit einem Mikroprozessor ein hohes Maß an Flexibilität sichergestellt ist, beispielsweise eine freizügige Plazierung des eingetasteten Bildes.

Eine andere Weiterbildung der Erfindung ermöglicht mit geringem Aufwand, eine seitliche Spiegelung des eingetasteten Bildes, da dieses dem gewohnten Blick in einem Spiegel entspricht und beispielsweise nicht zu Komplikationen führt, wenn sich der Benutzer mit Hilfe des Eigenbildes die Krawatte zurechtrücken will.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild des Ausführungsbeispiels,

Fig. 2 eine schematische Darstellung des Eigenbildes und des Fremdbildes mit eingetastetem Eigenbild und

Fig. 3 ein Teil des Ausführungsbeispiels in detaillierterer Darstellung.

Bei den folgenden Ausführungen wird das auszusendende Bild Eigenbild und das empfangene Bild Fremdbild genannt. Entsprechend werden der erste Speicher Fremdbildspeicher und der zweite Speicher Eigenbildspeicher genannt. Der dritte Speicher enthält ein Bild, das zum Eintasten in das Fremdbild vorgesehen ist. Deshalb wurde die Bezeichnung Bild-im-Bild-Speicher gewählt. Ferner ist das Ausführungsbeispiel auf die Verwendung einer Kathodenstrahlröhre gerichtet. Die Erfindung ist jedoch nicht auf eine Kathodenstrahlröhre beschränkt, sondern kann auch mit anderen Bildschirmen, beispielsweise mit Flüssigkristall-Bildschirmen, angewendet werden.

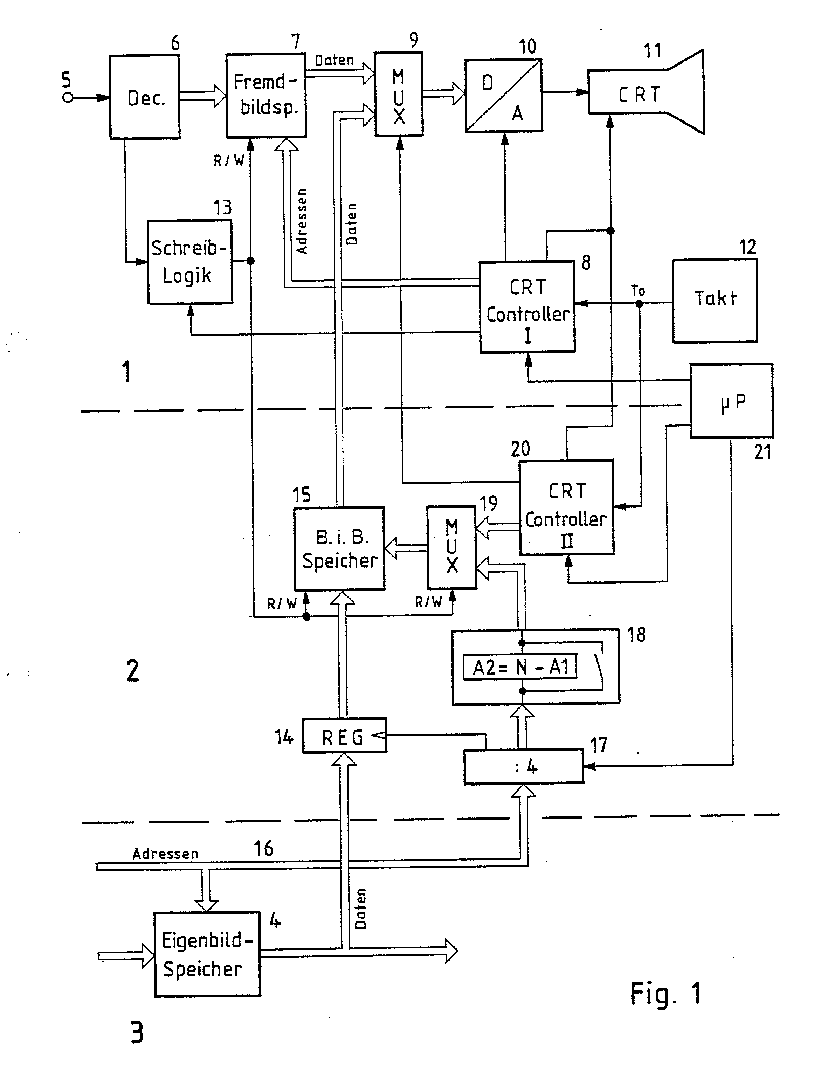

Die in Fig. 1 dargestellte Schaltungsanordnung umfaßt drei Bereiche 1, 2, 3, wovon der Bereich 1 diejenigen Baugruppen umfaßt, die in einem Empfängerteil einer Gegenseheinrichtung ohnehin vorhanden sind. Der Bereich 3 umfaßt Baugruppen, welche im Senderteil einer bekannten Gegenseheinrichtung vorhanden sind, wobei jedoch nur ein sogenannter Eigenbildspeicher 4 dargestellt ist, dessen Erläuterung zum Verständnis der Erfindung notwendig ist. Der Bereich 2 enthält diejenigen Baugruppen, welche zur Eintastung des Eigenbildes erforderlich sind.

Die empfangenen Signale werden über einen Eingang 5 einem Decoder 6, beispielsweise einem DPCM-Decoder, zugeführt. Die decodierten Signale werden als n Bit breiter Datenstrom in einen Fremdbildspeicher 7 geschrieben und aus diesem mit Hilfe von Adressen, die in einem CRT-Controller 8 erzeugt werden, ausgelesen und über einen Multiplexer 9 einem Digital/Analog-Wandler 10 zugeführt, mit dessen Ausgangssignalen die Steuerung der Bildröhre 11 erfolgt. Der CRT-Controller ist als Baustein erhältlich, beispielsweise unter der Typenbezeichnung 6345 der Firma Hitachi. Er wird von einem Taktgenerator 12 synchronisiert und gibt seinerseits Synchronzeichen an im einzelnen nicht dargestellte Schaltungen zum Betrieb der Bildröhre 11.

Da die empfangenen Daten mit dem Takt To nicht synchron sind, erfolgt eine Schreib/Lese-Steuerung des Fremdbildspeichers 7 von einer Logikschaltung 13, wobei die Steuerung durch den CRT-Controller 8 Vorrang hat. Wird also vom CRT-Controller 8 das Lesen eines Datenwortes erfordert, so wird in jedem Fall das Schreib/Lese-Signal R/W auf Lesen geschaltet. Die möglicherweise während dieser Zeit ankommenden Daten werden entsprechend verzögert und bei der nächsten Gelegenheit in den Fremdbildspeicher 7 eingeschrieben.

In dem Eigenbildspeicher 4 befinden sich Daten, welche das auszusendende Bild darstellen. Von diesen Daten sind solche, die ausgewählten Bildpunkten entsprechen, über ein Register 14 in einen Bild-im-Bild-Speicher 15 einschreibbar. Von den zum Auslesen aus dem Speicher 4 verwendeten, über einen Adreßbus 16 zugeführten Adressen, wird nur ein Teil zum Einschreiben in den Bild-im-Bild-Speicher 15 verwendet. So wird beispielsweise in X- und Y-Richtung jeweils nur jedes vierte Bildelement in den Bild-im-Bild-Speicher 15 geschrieben. In diesem Fall ist die Division der Adressen durch vier in einer Schaltung 17 besonders einfach durch Shiften der Adressen um zwei Stellen nach rechts zu erreichen. Mit geeigneten Rechenschaltungen können jedoch auch andere Teiler verwirklicht werden. Die somit erzeugten Schreibadressen werden über die Vertauschungsschaltung 18 und einen Multiplexer 19 den Adresseneingängen des Bild-im-Bild-Speichers 15 zugeführt, wenn von der Schreiblogik 13 der Speicher 15 in den Schreibmodus und der Multiplexer 19 in die untere Stellung geschaltet ist. Im Register 14 werden die Daten zwischengespeichert. Zur Taktung des Registers 14 wird in der Schaltung 17 ein Signal abgeleitet, das bei jeder Adresse einen Taktimpuls enthält.

Zum Lesen wird der Bild-im-Bild-Speicher 15 von einem zweiten CRT-Controller 20 gesteuert, der in einem Master/Slave-Betrieb durch den ersten CRT-Controller 8 synchronisiert wird und Leseadressen für den Bild-im-Bild-Speicher 15 erzeugt.

Die Positionierung des eingetasteten Bildes erfolgt mit Hilfe des CRT-Controllers II 20. Der CRT-Controller II 20 erzeugt die Leseadressen des Speichers 15 und übernimmt die Steuerung des Multiplexers 9. Synchronisiert wird der CRT-Controller II 20 durch den CRT-Controller I 8 mit H- und V-Synchronimpulsen.

Die Position des eingetasteten Bildes und des Fremdbildes werden als Bild-Anfang/Ende- und Zeilen-Anfang/Ende-Adressen in einer "Start-up"-Routine mit Hilfe des Mikroprozessors 21 in die CRT-Controller 8, 20 eingeschrieben (programmiert). Außerdem kann vom Mikroprozessor 21 aufgrund von gespeicherten oder einzugebenden Daten der Verkleinerungsfaktor über den Teiler in der Schaltung 17 eingestellt werden.

Die Schaltung 18 vertauscht die zugeführten Adressen mit denjenigen der Bildelemente, welche symmetrisch zu einer senkrechten Mittellinie des Bildes liegen. Sind beispielsweise in jeweils einer Richtung des verkleinerten Bildes (N + 1) Bildelemente mit Adressen von 0 bis N vorhanden, so gibt die Schaltung 18 eine Adresse A2 = N - A1 aus, wobei A1 die zugeführte Adresse ist. Für den Fall, daß diese Spiegelung nicht benötigt wird, kann die Schaltung 18 durch einen als Schalter dargestellten Bypass umgangen werden.

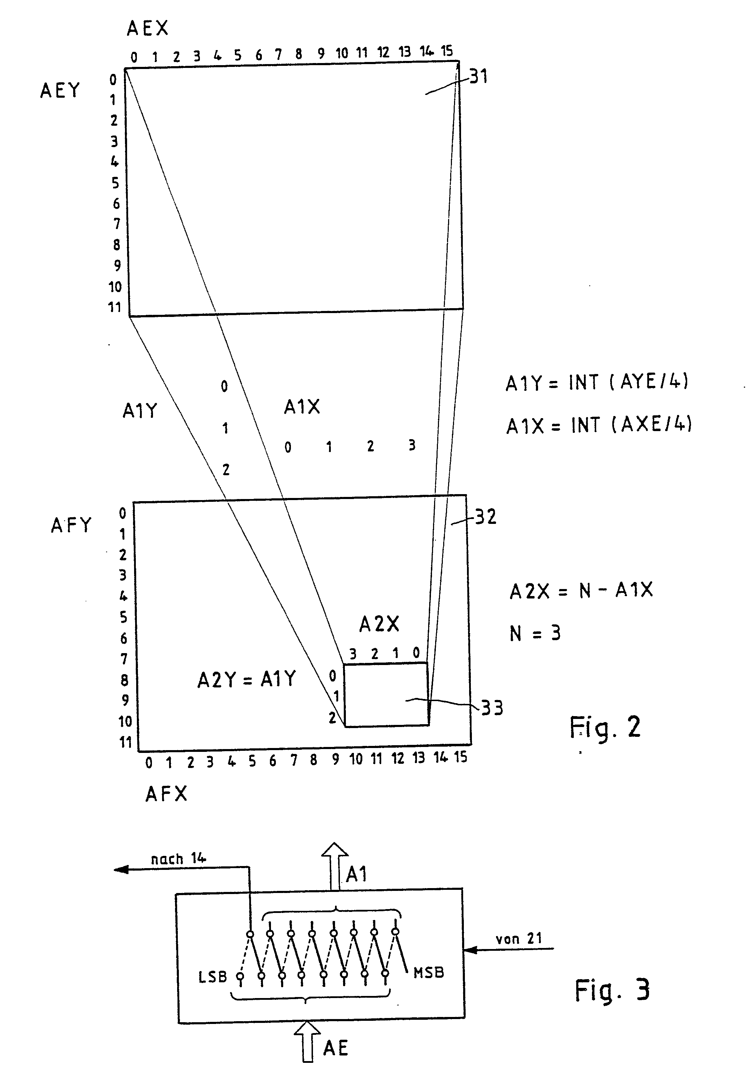

Das obere Raster 31 in Fig. 2 stellt schematisch das Eigenbild dar, wobei die einzelnen Bildelemente im Eigenbildspeicher 4 unter Adressen abgelegt sind, die jeweils einen Horizontalanteil AEX und einen Vertikalanteil AEY aufweisen. Das darunter dargestellte Raster 32 des Fremdbildes umfaßt die Adressen AFX, AFY und enthält das eingetastete verkleinerte Eigenbild 33 mit den Adressen A2X, A2Y. Der Übersichtlichkeit halber wurden in Fig. 2 die Raster mit nur 16 x 12 Bildelementen dargestellt. Die Bildelemente des Fremdbildes sind mit den Adressen AFX, AFY aus dem Fremdbildspeicher 7 (Fig. 1) auslesbar. Zum Einschreiben des verkleinerten Eigenbildes in den Bild-im-Bild-Speicher 15 werden die Adressen AEX und AEY jeweils durch 4 dividiert, wobei der Rest entfällt. Eine derartige Division wird am einfachsten durch Shiften in Richtung auf die geringstwertige Stelle ausgeführt. Die somit erhaltenen Adressen sind in Fig. 2 mit A1X und A1Y bezeichnet.

Während die Adressen A1Y als Adressen A2Y direkt zum Einschreiben in den Bild-im-Bild-Speicher 15 verwendet werden, wird durch die Umwandlung der Adressen A1X das eingetastete Eigenbild um eine senkrechte Achse gespiegelt.

Zum Lesen der im Fremdbildspeicher 7 und im Bild-im-Bild-Speicher 15 gespeicherten Daten sind die CRT-Controller 8, 20 derart synchronisiert, daß bei der in Fig. 2 dargestellten Lage des eingetasteten Eigenbildes im Fremdbild beispielsweise nach dem Auslesen des Bildelementes AFX = 9, AFY = 8 aus dem Fremdbild speicher 7 der Multiplexer 9 vom Fremdbild auf das Eigenbild umgeschaltet wird. Der CRT-Controller 20 legt dann die Adresse A2X = 3, A1Y = 0 an den Adresseneingang des Bild-im-Bild-Speichers 15, worauf die zu diesem Bildelement gehörenden Daten über den Multiplexer 9 zum Digital/Analog-Wandler 10 gelangen.

Fig. 3 zeigt eine Darstellung der Schaltung 17 (Fig. 1) als Mehrfach-Umschalter, der vom Mikroprozessor 21 einstellbar ist. Der Übersichtlichkeit halber ist nur einer von zwei für Adressen in horizontaler und in vertikaler Richtung erforderlichen Umschaltern dargestellt. Aus den Adressen AE des Eigenbild-Speichers 4, die mit einer Breite von 8 Bit zugeführt werden, werden ein Taktsignal für das Register 14 und 7 Bit breite Adressen A1 für den Bild-im-Bild-Speicher 15 abgeleitet.

Bei einer vierfachen Verkleinerung wird das geringstwertige Bit der ankommenden Adressen AE nicht genutzt, das zweitgeringstwertige bildet das Taktsignal, und die restlichen sechs Bit werden als Adresse A1 verwendet. Das höchstwertige Bit der Adressen A1 wird nicht gesetzt. Bei der gewählten Verkleinerung ist als Bild-im-Bild-Speicher nur ein Speicher erforderlich, der ein Sechzehntel der Fläche des Eigenbildspeichers einnimmt.

Bei der gestrichelt dargestellten Stellung des Umschalters erfolgt eine Halbierung der Bildgröße. Dazu wird das geringstwertige Bit der ankommenden Adressen AE als Taktsignal dem Register 14 zugeführt, während die 7 restlichen Bits die Adresse A1 bilden.

## Ansprüche

1. Gegenseheinrichtung, bei welcher von einer Gegenstation empfangene Signale nach einer Decodierung in einem ersten Bildspeicher zwischengespeichert und auf einem Bildschirm sichtbar gemacht werden, und bei welcher ferner die von einer Kamera erzeugten und zur Gegenstation übertragenen Signale in einem zweiten Bildspeicher zwischengespeichert werden, dadurch gekennzeichnet,
daß aus dem zweiten Bildspeicher (4) zu ausgewählten Bildpunkten gehörende Signale ausgelesen und über einen dritten Bildspeicher (15) einem zwischen dem ersten Bildspeicher (7) und dem Bildschirm (11) vorgesehenen Multiplexer (9) zugeführt werden.

2. Gegenseheinrichtung nach Anspruch 1, dadurch gekennzeichnet,
daß der dritte Bildspeicher (15) zum Schreiben mit Adressen steuerbar ist, die durch Division von Adressen abgeleitet werden, die dem zweiten Bildspeicher (4) zugeführt werden.

3. Gegenseheinrichtung nach Anspruch 1, dadurch gekennzeichnet,
daß der dritte Bildspeicher (15) zum Lesen mit Adressen steuerbar ist, die synchron mit den Adressen zum Auslesen der empfangenen decodierten Signale aus dem ersten Bildspeicher (7) erzeugt werden.

4. Gegenseheinrichtung nach Anspruch 3, dadurch gekennzeichnet,
daß je eine Bildschirmsteuerschaltung (8, 20) (CRT-Controller) zur Erzeugung von Adressen zum Lesen des ersten Bildspeichers (7) und zur Erzeugung von Adressen zum Lesen des dritten Bildspeichers (15) vorgesehen sind,
daß die Bildschirmsteuerschaltungen (8, 20) mit einem gemeinsamen Taktsignal versehen sind und daß die Bildschirmsteuerschaltung 20 durch die Bildschirmsteuerschaltung 8 synchronisiert wird und das Lesen des Bildspeichers 15 und das Steuern des Multiplexers 9 übernimmt.

5. Gegenseheinrichtung nach Anspruch 1, dadurch gekennzeichnet,
daß mit Hilfe einer Schreiblogikschaltung (13) aus Signalen der ersten Bildschirmsteuerschaltung (8) und aus von den empfangenen decodierten Signalen abgeleiteten Taktsignalen ein Schreib/Lese-Umschaltsignal erzeugt wird, welches dem ersten Bildspeicher (7), dem dritten Bildspeicher (15) und einer Umschalteinrichtung (19) für die Adresseneingänge des dritten Bildspeichers (15) zuführbar ist.

6. Gegenseheinrichtung nach Anspruch 4, dadurch gekennzeichnet,
daß die Bildschirmsteuerschaltungen (8, 20) von einem Mikroprozessor (21) programmierbar sind.

7. Gegenseheinrichtung nach Anspruch 1, dadurch gekennzeichnet,
daß zwischen dem zweiten Bildspeicher (4) und dem dritten Bildspeicher (15) ein Datenregister (14) angeordnet ist, das von einem Taktsignal getaktet wird, dessen Frequenz doppelt so groß ist wie die Frequenz eines die geringstwertige Stelle der Schreibadressen des dritten Bildspeichers (15) bildenden Signals.

8. Gegenseheinrichtung nach Anspruch 1, dadurch gekennzeichnet,
daß in der Zuführung der Adressen zum dritten Bildspeicher (15) eine Schaltung (18) zum Verändern der Adressen im Sinne einer Spiegelung des Bildes angeordnet ist.

# EP 0 362 610 A2

R.-Nr. 2020

Fig. 1

R.- Nr. 2020

Fig. 2

$$A1Y = INT (AYE/4)$$
$$A1X = INT (AXE/4)$$

$$A2X = N - A1X$$
$$N = 3$$

Fig. 3